# EUROPEAN PATENT APPLICATION

(11) **EP 4 706 922 A1**
(43) Date of publication of application: **11.03.2026**
(21) Application number: 25199741.7
(22) Date of filing: 02.09.2025
(51) Int. Cl.: B27D 5/00, B23Q 39/04, B27M 3/18, B27M 1/08

(54) **METHOD FOR SQUARING AND EDGE-BANDING PANELS AND COMPUTER NUMERICAL CONTROL MACHINE TOOL DESIGNED TO PERFORM THE METHOD**

(30) Priority: 05.09.2024 IT 202400019804
(71) Applicant: TECNO LOGICA S.R.L., 31027 Spresiano (TV) (IT)
(72) Inventor: Piasentin, Mirko, 31027 Spresiano (TV) (IT)
(74) Representative: Citron, Massimiliano

(57) **Abstract**

A method for squaring and edge-banding panels is described, with the steps of:
- loading a panel onto a member rotatable about a vertical rotation axis;
- rotating the rotatable member with predefined angular steps until it completes a complete revolution,
- sequentially stopping the panel in front of N processing work-stations, N >= 2, arranged in a circular array around the rotatable member,
wherein, during the rotation of the rotatable member, the panel is always held vertical;
- as the panel is stopped at the N work-stations, processing the panel edges using panel edge processing units installed at the N work-stations; and
- unloading the processed panel from the rotatable member.

The method enables high production rates in limited spaces.

## Description

The present invention relates to a method for squaring and edge-banding panels and to a computer numerical control machine tool designed to perform the method.

For squaring and edge-banding wooden panels to be used in composition of furniture items, here taken as example, two types of systems are commonly known.

In the first, the panel is processed stationary and horizontally first by a multi-tool spindle, which moves back and forth and loads itself at a tool storage unit, and then by an edge-banding head, which is fed with adhesive tape and slides along the edge of the panel to apply a covering tape. For large panels, the tail of the tape protrudes from the edge-banding head and jiggles around the panel like a whip, causing safety issues and jamming. Generally, this type of plant is very slow, partly because the spindle and the edge-banding head must alternate to reach the panel.

The second type involves high-speed in-line edge-banders. The panels slide horizontally on roller conveyors and the processing is performed on the fly, namely the processing units follow the panel as it moves along the roller conveyor. The system is fast but very complex, and occupies entire warehouses. Another limitation is that it cannot produce shaped panels, only rectangular ones. In short, this type of system has little flexibility.

The main object of the invention is to improve the current state of the art.

Another object is a method for squaring and edge-banding panels that allows for a higher production speed than the first type of system and/or more flexibility than the second type of system.

Another object is a method for squaring and edge-banding panels that can be implemented in a small space, smaller than that occupied by the second type of system.

Another object is a machine capable of performing the method.

These and other objects are achieved by what is reported in the attached claims; advantageous technical characteristics being defined in the dependent claims.

A method for squaring and edge-banding panels is proposed with the following steps:
- loading a panel onto a member rotatable about a vertical axis of rotation;
- rotating the rotatable member with predefined (e.g. constant) angular steps until it makes a complete turn for
   sequentially stopping the panel in front of N processing work-stations, N >= 2, arranged in a circular series around the rotatable member,
wherein during the rotation of the rotatable member the panel is always kept vertical and preferably with the same larger surface always facing towards the outside of the rotatable member (i.e. the larger surface remains orthogonal to a plane passing through the vertical axis of rotation);
- as the panel is stopped at the N work-stations, processing the edges of the panel using panel edge processing units installed at the N work-stations; and
- unloading the machined panel from the rotatable member.

An advantage of the method is the speed of production, because the N work-stations are specialized to perform specific operations, so that no time is wasted for example in equipping a spindle or moving it in competition with the edge-banding head.

Another advantage is compactness. The N work-stations are located in a relatively limited space, and the machining unit of each said work-station can machine the panel while being stationary, which allows for virtually unlimited shaping programs (e.g. rounding one or more panel edges) and precision-performed treatments, thus enhancing production flexibility.

In the circular series, the machine may also comprise additional work-stations whose processing units machine the panel in parts other than the perimeter edges. Or one or more of the N work-stations may comprise additional processing units that machine the panel in parts other than the perimeter edges. That is, in the circular series, the machine may comprise M work-stations, M > N, where only the N work-stations have processing units dedicated to processing the panel edges.

Preferably, the edges of the panel are machined at each of the said N work-stations through a respective processing unit present in each work-station, for the compactness of the system.

Preferably, the panel is loaded already machined, i.e. it is not raw but for example has a coating on the larger surface and/or is painted.

To facilitate the storage and processing of the panels, the panel is preferably loaded
taking it while it lies horizontal, then
tilting it to set it vertical and applying it to the rotatable member vertically.

Preferably, the loading/unloading step is performed by a robot or a hoist or a manipulator, to handle panels of different sizes and weights.

As advantageous preferred variants, in the method:
- the panel is mounted on the rotatable member and picked up by the rotatable member after a complete revolution of the rotatable member at a loading/unloading area free of work-stations and placed in the circular series between two work-stations; and/or
- the panel is milled to create an outline of its perimeter edges at a first work-station; and/or
- a tape is deposited along the perimeter edges of the panel on surfaces of the panel corresponding to its thickness at a second work-station, preferably subsequent to the first work-station in the circular series; and more preferably
   the tape is trimmed to equalize its width to the thickness of the panel
   at a third work-station, preferably subsequent to the second work-station in the circular series
   or more preferably at the same (second) work-station.

For greater efficiency, preferably the panel is milled by moving only vertically and/or horizontally, or sequentially vertically and then horizontally, or vice versa, a machining unit installed in the first work-station to machine corresponding sides of the panel.

For greater efficiency, preferably the tape is deposited by moving sequentially only vertically and/or horizontally, or sequentially vertically and then horizontally, or vice versa, an edge-banding head installed in the second work-station to edge-band corresponding sides of the panel.

More preferably the tape is deposited by moving the edge-banding head
along a trajectory that runs along all the perimeter edges of the panel, or
along a trajectory that runs along only a subset of the perimeter edges of the panel. The remaining perimeter edges are covered with tape by the same edge-banding head when it travels a different trajectory complementary to the first one with respect to the perimeter edges, or by two edge-banding heads travelling along trajectories, which are different and complementary to each other, with respect to the perimeter edges.

Preferably, the tape is trimmed by moving sequentially only vertically and/or horizontally, or sequentially vertically and then horizontally, or vice versa, a processing unit installed in the third work-station to trim corresponding sides of the panel.

To specialize the work-stations, more preferably in the method:
- a tape is deposited along the vertical perimeter edges of the panel on surfaces of the panel corresponding to its thickness at an edge-banding work-station and a tape is deposited along the horizontal perimeter edges of the panel on surfaces of the panel corresponding to its thickness at another different edge-banding work-station. The position of the two above-mentioned edge-banding work-stations in the circular array may be reversed;
- the tape deposited by an edge banding work-station is trimmed to equalize its width to the thickness of the panel at a trimming work-station which in the circular series is the work-station subsequent to the edge banding work-station.

After unloading, the panel may be immediately mounted on a furniture item or loaded onto another rotatable member for further processing, such as the drilling of the panel, the insertion of base plates and/or guides into the panel.

In a more preferred variant, during rotation of the rotatable member, the panel is always kept vertical and rotated about a vertical axis so that said larger surface facing radially towards the outside of the rotatable member is oriented toward another direction, specifically, facing radially towards the inside of the rotatable member after a 180° rotation. This variant facilitates the panel processing by exposing both of its larger surfaces to the N work-stations (i.e. facing towards the outside of the rotatable member) during rotation of the rotatable member.

In a preferred variant, after the tape has been deposited from an edge-banding work-station, an excess of tape that protrudes from a vertex of the panel is cut, and more preferably said excess tape is cut at the edge-banding work-station that deposited it.

In an embodiment the method comprises the step of loading onto the rotatable member, preferably via a robot or manipulator, Q >= 2 panels and placing them on the rotatable member vertically offset and arranged parallel to the vertical axis of rotation, and preferably substantially coplanar with each other.

Since the rotatable member thus transports more panels, the processing capacity is increased.

For this purpose the rotatable member comprises a circular series of panel receiving zones, each of the panel receiving zones being adapted to receive Q panels vertically offset and arranged parallel to the vertical axis of rotation, and preferably substantially coplanar with each other.

In an embodiment, which optimizes the edge banding step on multiple panels, the method comprises the step of applying a tape to vertical and aligned edges of the Q panels loaded on the rotatable member. Even more efficiently, said step of applying simultaneously a tape occurs in particular by laying out a same tape onto vertical and aligned edges of the Q panels and then cutting the tape at an empty space which separates two adjacent panels of the Q panels.

In this way it is possible to optimize (and shorten) the tape laying step, for example by means of a single edge-banding head that runs along aligned edges of the Q panels in a single go.

In an embodiment the method comprises the step of rotating the Q panels, after a tape has been applied to each of them on opposite vertical edges thereof, so as to put vertically and align horizontal untaped edges of the Q panels to obtain new vertical and aligned edges devoid of tape, and then
applying tape to the new vertical and aligned edges, specifically by laying one same tape on new vertical and aligned edges and then cutting the tape at an empty space which separates the tape-covered horizontal edges of two adjacent panels of the Q panels.

In an embodiment, the method comprises the step of performing an end-trimming operation on the tape which remains applied to the vertical and aligned edges of the Q panels after said cut in correspondence with the empty space.

In particular, the step of rotating the Q panels occurs by rotating the Q panels by 90 degrees about an axis orthogonal to the larger surface of the panel.

In an embodiment, the step of rotating the Q panels occurs while keeping the Q panels constrained to the rotatable member.

In an embodiment, the step of rotating the Q panels is performed by a robot or a manipulator.

In an embodiment the step of rotating the Q panels takes place by
detaching the Q panels from the rotatable member (preferably via a robot or manipulator),
performing said rotation, and then
re-attaching the thus rotated Q panels to the rotatable member (preferably via a robot or manipulator).

In an embodiment, the method comprises the step of bringing the Q panels closer to each other after they have been loaded onto the rotatable member by moving them parallel to the rotation axis so as to reduce the relative vertical distance of adjacent horizontal edges of two panels of the Q panels to a minimum corresponding to said empty space.

Another aspect of the invention concerns a CNC machine for squaring and edge-banding panels, comprising
- a rotatable member that
   is incrementally rotatable about a vertical axis by a drive according to predefined angular steps, and
   comprises N supports, N >= 2, each configured for receiving and supporting a larger surface of the panel so that during rotation of the rotatable member said larger surface is always kept vertical and preferably always facing radially outward of the rotatable member;
- N processing work-stations which are arranged in a circular series around the rotatable member, and comprise a panel edge-processing unit;
wherein the machine is configured (e.g. programmed via software) for
- rotating the rotatable member and sequentially bring a panel at each work-station,
- stopping the panel at each work-station, and
- processing the edges of the panel using said processing units.

For compactness, the machine preferably comprises one or more panel edge processing units at each of said N work-stations.

For greater efficiency, the machine preferably comprises a pick-up means (e.g. a robot or a hoist or a manipulator) adapted to
load a panel by lifting it from a loading zone, and
apply it vertically on one of the N supports of the rotatable member.

To facilitate loading, the machine preferably comprises a loading area configured to store panels placed horizontally and stacked on top of each other, and the pick-up means is adapted to
load a panel by taking it horizontal from the loading area, tilt it to set it vertical and
apply it vertically on one of the N supports of the rotatable member.

Preferably the N work-stations comprise:
- a squaring work-station comprising one or more milling units movable along a vertical and/or horizontal axis configured to mill sides of the panel and thus create the outline of its perimeter edges;
- an edge-banding work-station comprising an edge-banding head movable along a vertical and/or horizontal axis configured to deposit a tape along the perimeter edges of the panel on surfaces of the panel corresponding to its thickness;
- a trimming work-station comprising a trimming unit movable along a vertical and/or horizontal axis configured to trim corresponding sides of the panel and equalize the width of the tape to the thickness of the panel.

In an embodiment, in the circular series the trimming work-station, the edge-banding work-station and the end-trimming work-station may also coincide; or only two of them may coincide.

More preferably, the N work-stations also comprise an edge-trimming work-station comprising a cutting unit movable along a vertical and/or horizontal axis to cut, after the tape has been deposited by an edge-banding work-station, an excess of tape that protrudes cantilevered from a vertex of the panel, and more preferably, said excess tape is cut at the edge-banding work-station that deposited it.

Preferably, the machine comprises a panel loading/unloading work-station or zone, preferably located in the circular series between two of the N work-stations, wherein the panel is (or may be) mounted on the rotatable member and picked up from the rotatable member after a complete revolution of the rotatable member. Specifically, the loading/unloading work-station or zone is a passageway between the N work-stations that provides access to the rotatable member.

More preferably the edge-banding head is configured to deposit the tape by moving
along a trajectory that runs along all the perimeter edges of the panel, or
along a trajectory that travels only a subset of adjacent edges of the panel's perimeter edges. The remaining perimeter edges are covered with tape by the same edge-banding head when it follows a different trajectory, or by two edge-banding heads following trajectories which are different and complementary with respect to the perimeter edges.

After unloading, the panel may be immediately mounted on a furniture item or loaded onto another rotatable member for further processing such as drilling, base plates or guides insertion.

As a preferred structure, one or each of the N work-stations comprises two parallel vertical columns on which is mounted vertically translatable, through drives, a horizontal bar on which a carriage is mounted that is linearly translatable, via a drive, on the horizontal bar. On the carriage is mounted a machining unit, which can therefore move along two axes thanks to the coordinated movement of the bar and the carriage.

In the squaring work-station, the processing unit is one or more milling cutters, whose tool is programmed to follow the perimeter of the panel and remove material therefrom to create the desired outline of the perimeter, which can be, for example, rectangular with sharp or rounded edges.

To improve cycle time, preferably in the squaring work-station there are two identical milling cutters that simultaneously process the sides of the panel in the above-mentioned manner.

To allow the support to be adapted to various panel formats, one or each of the rotatable member's supports comprises a plurality of anchoring/fixing means, e.g. suction cups, which are mounted to always remain coplanar with each other and movable relative to one another, so that the anchoring/fixing means can assume different positions - and be distributed with different patterns - within an imaginary vertical plane to determine, for a panel, support and anchoring points that are coplanar and distributed across said plane. The suction cups may also be fixed, and only the suction cups covering the panel are withdrawn.

In particular, the anchoring/fixing means are translatable only along one axis or along two orthogonal axes.

A preferred structure for one or each of the supports on the rotatable member, which allows it to be adapted to various panel formats, comprises:
- a first guide which is integral with the support and develops longitudinally along a first direction,
- a second guide that
   develops longitudinally along a second direction orthogonal to the first, and
   is mounted in an independently translatable manner along the first guide,
- a drive to translate the second guide relative to the first guide,
- a plurality of anchoring means, e.g. suction cups, mounted on and distributed along the second guide and movable along the second guide independently of each other,
- a drive for translating at least a subset of anchoring means of the plurality along the second guide to position them at predefined points along the second guide.

Preferably the first guide is vertical and the second guide is horizontal, or vice versa. More preferably one or each of the supports on the rotatable member comprises:
- two first guides like the first guide, which are parallel and spaced apart,
- two second guides like the second guide, which are parallel and spaced apart, the plurality of anchoring means being distributed on the second guides.

The material constituting the panels is not essential, however the method and machine are particularly advantageous for wooden or plastic panels, and in particular for making furniture items.

Further advantages will become clear from the following description, which refers to an example of preferred embodiment of a machine in which:

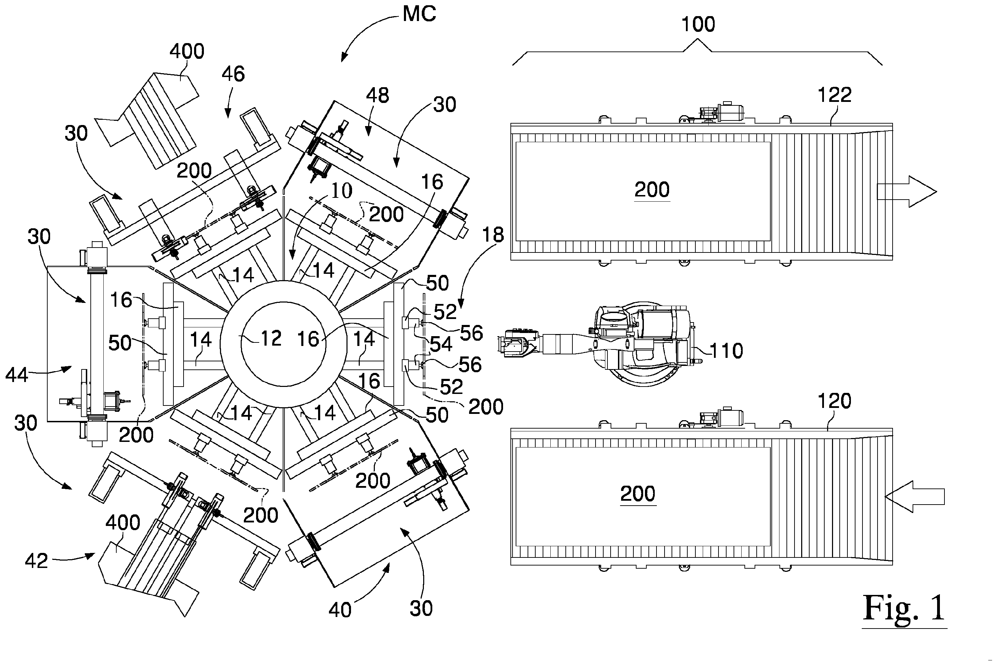

- figure 1 shows a plan view of the machine;
- figure 2 shows a side view of the machine;
- figures 3 and 4 show a side and top view respectively of a processing work-station;
- figures 5 and 6 show a side and top view respectively of a second processing work-station;
- figures 7 and 8 show a side and top view respectively of a third processing work-station.
- figures 9a-9g show schematically a variant of operation for the machine.

Equal numbers in the figures indicate equal or substantially equal parts. To avoid crowding the drawings, identical elements are sometimes left unnumbered.

A computer numerical control machine tool MC comprises a central member 10 which is rotatable about a vertical Y-axis, and N machining work-stations 30, N >= 2, arranged in a circular series with constant angular pitch around the member 10. In the example N=5. The member 10 is composed of a central rotatable drum 12 from which radial arms 14, which support a respective vertical support 16 at their end, extend radially, outwards and towards the work-stations 30, with radial symmetry.

The supports 16 are N+1 (to maximize production efficiency) and arranged uniformly around the drum 12 in a circular series with a constant angular pitch. The N work-stations are arranged instead so as to leave a free circular sector 18 around the drum 12. By the rotation of the member 10, via known drives, each support 16 can be rotated and brought in sequence in front of each of the work-stations 30 or the free sector 18.

Preferably, near the free sector 18, there are loading/unloading means 100 to feed the member 10 with panels through the free sector 18. Preferably, the means 100 comprise a robot 110.

In particular when a support 16 is located in front of the robot 110 in the free sector 18, the robot 110 is adapted to
mount a panel vertically on that support 16, so that the larger surface of the panel 200 is parallel to the larger surface of the support 16, or
remove a panel from that support 16.

The panel 200 mounted on the support 16 has
its larger dimension arranged vertically and parallel to the Y-axis, and
its larger surface orthogonal to a plane passing through the Y axis.

Preferably, the means 100 also comprise a loading roller conveyor 120 and an unloading roller conveyor 122. The robot 110 is able to pick up panels 200 lying horizontally from the loading roller conveyor 120 and place the panels 200 horizontally on the unloading roller conveyor 122. The panels 200 are transported to and from the machine MC via the roller conveyors 120, 122.

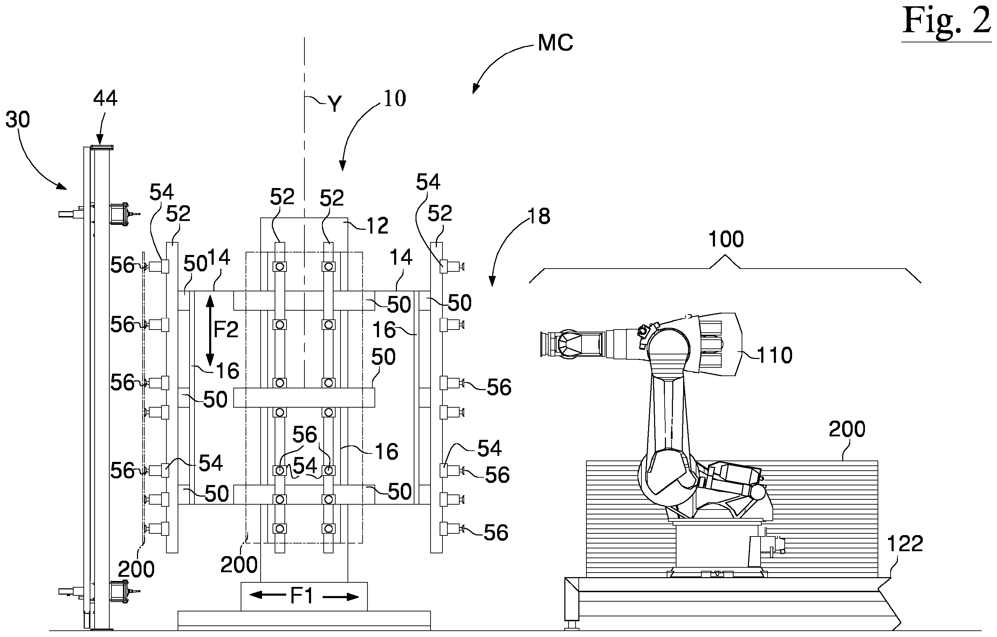

Each support 16 (see Fig. 2) comprises fixed horizontal guides 50, parallel to each other and spaced apart in height. Two vertical bars 52 are mounted on the horizontal guides 50, and on each bar 52 are mounted carriages 54 equipped with anchoring means 56 for a panel 200, e.g. a suction cup.

By means of known drives the bars 52 are horizontally translatable (arrow F1) on the horizontal guides 50 independently from each other.

By means of known drives each carriage 54 is translatable vertically (arrow F2) on the bars 52 independently of each other.

The bars 52 and/or the carriages 54 are movable in a coordinated manner to distribute the anchoring means 56 within a plane and/or with respect to the support 16 so that they can support the larger surface of a panel 200 in the greatest possible number of points and/or exploit all or almost all of the larger surface of the panel 200 to keep it integral with the member 10.

Another advantage of the mobility of the anchoring means 56 is being able to leave exposed areas on the back of the panel 200 which are then subject to drilling.

Starting from the free sector 18 and visiting the five work-stations 30 in a clockwise direction, preferably they are:
- a squaring work-station 40 configured to create the perimeter outline of the panel 200;
- an edge-banding work-station 42 configured to lay a segment of tape over the vertical edges of the panel 200;
- a trimming work-station 44 configured to equalize the width of the tape deposited on the vertical edges of the panel 200 to the thickness of the panel 200;
- a second edge-banding work-station 46 configured to lay a segment of tape over the horizontal edges of the panel 200; and
- a second trimming work-station 48 configured to equalize the width of the tape deposited on the horizontal edges of the panel 200 to the thickness of the panel 200.

In the circular sequence the positions of work-stations 42, 44 may also be exchanged with those of the work-stations 46, 48.

Preferably, the work-stations 42 and 46 are also configured to cut off an excess of tape that protrudes cantilevered from a vertex of the panel 200.

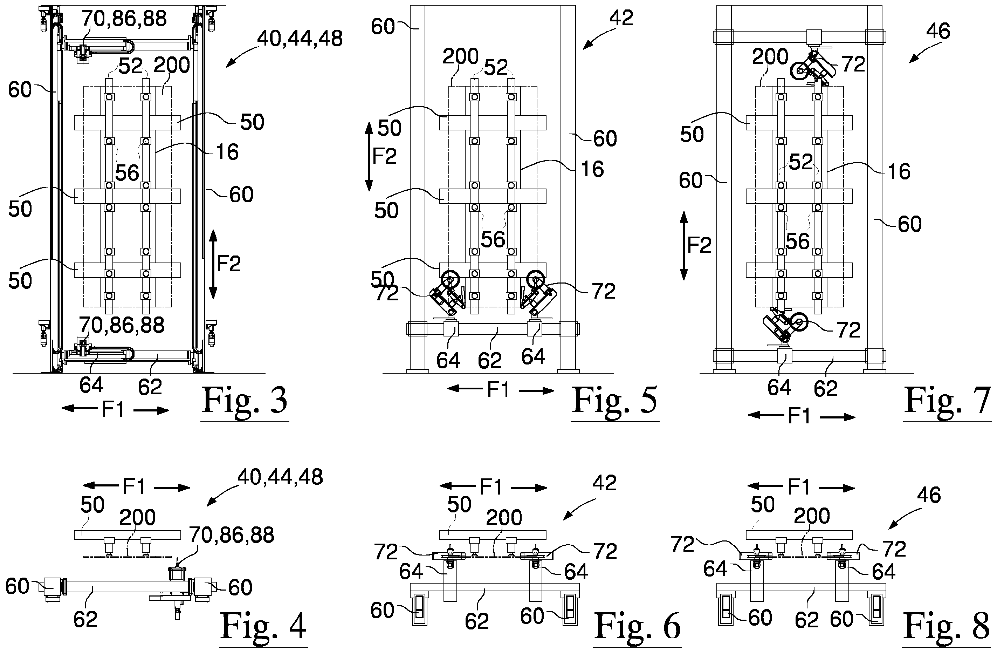

Preferred embodiments for the work-stations 40, 42, 44, 46 and 48 are shown in Figs. 3-8.

Each work-station 40, 42, 44, 46, 48 comprises two parallel vertical columns 60 on which two horizontal bars 62 are mounted vertically translatable (arrow F2) using known drives. On each horizontal bar 62 a carriage 64 is mounted which is linearly translatable, using known drives, on the respective horizontal bar 62 (arrow F1).

On the carriage 64 is mounted a processing unit capable of moving along two axes thanks to the coordinated movement of the horizontal bars 62 and the carriages 64.

In the squaring work-station 40 (Figs. 3 and 4) the machining unit is a milling cutter 70, the tool of which is programmed to follow the perimeter of the panel 200 (shown in dotted lines in Figs. 3 and 4) and remove material therefrom to create the desired outline of the perimeter, which may be, for example, rectangular with sharp or rounded edges.

To improve the cycle time, preferably in the squaring work-station 40 there are two identical mill cutters 70 which simultaneously process the sides of the panel 200 in the aforementioned manner.

In the edge-banding work-station 42 (fig. 5 and 6) the processing unit is an edge-banding head 72, provided with
a glue-spreading device,
a tape application head, and preferably
a device for cutting off an excess of tape protruding from the edges of the panels 200.

The edge-banding head 72 runs along the vertical sides of the panel 200 (drawn in dotted lines) first laying a layer of glue and immediately after applying a strip of tape on it which will constitute the edge.

Once the tape has been applied, the edge-banding head 72 cuts off the excess of tape that extends beyond the length of the side.

To improve the cycle time, preferably in the edge banding work-station 42 there are two identical edge-banding heads 72 which simultaneously work in the aforementioned manner on a respective vertical side of the panel 200.

In the second edge-banding work-station 46 (Fig. 7 and 8) the processing unit is an edge-banding head 72. The structure is the same as that of the edge-banding work-station 42 with the difference that the edge-banding head 72 processes, in the same way, the horizontal sides of the panel 200. Here too, to improve the cycle time, preferably there are two identical edge-banding heads 72 which simultaneously process a respective horizontal side of the panel 200.

The trimming work-station 44 and the trimming work-station 48 have the same structure as the squaring work-station 40: in them the processing unit is respectively a milling cutter 86, 88 which re-runs respectively the vertical and horizontal sides of the panel 200 to cut the part of the tape which in width exceeds the edge of the thickness of the panel 200.

To supply the work-stations 42, 46 with tape, known tape distributors 400 are provided, positioned diametrically opposite the support 16 with respect to the work-stations 42, 46.

### OPERATION

During production time, the robot 110 takes a horizontal panel 200 from the roller conveyor 120 and loads it vertically onto one of the supports 16 which remains stationary in the free sector 18. For convenience, we call this support 16x.

On the support 16x the anchoring means 56 are activated to fix the panel 200 to the member 10.

Then the member 10 rotates to bring that panel 200 in front of each work-station 30. There the member 10 remains stationary and waits until the processing unit of the work-station 30 has finished processing the panel 200.

When the member 10 has completed a full revolution, the panel 200 has visited all the work-stations 30 and has returned to the free sector 18, where, after the anchoring means 56 on the support 16x are deactivated, the robot 110 will detach it from the support 16x and place it horizontally on the roller conveyor 122 for subsequent management.

The machine MC can work alone as an edge-banding center for a panel or be combined with other machines downstream, which for example can perform other operations on the panel such as drilling, bases or guides insertion.

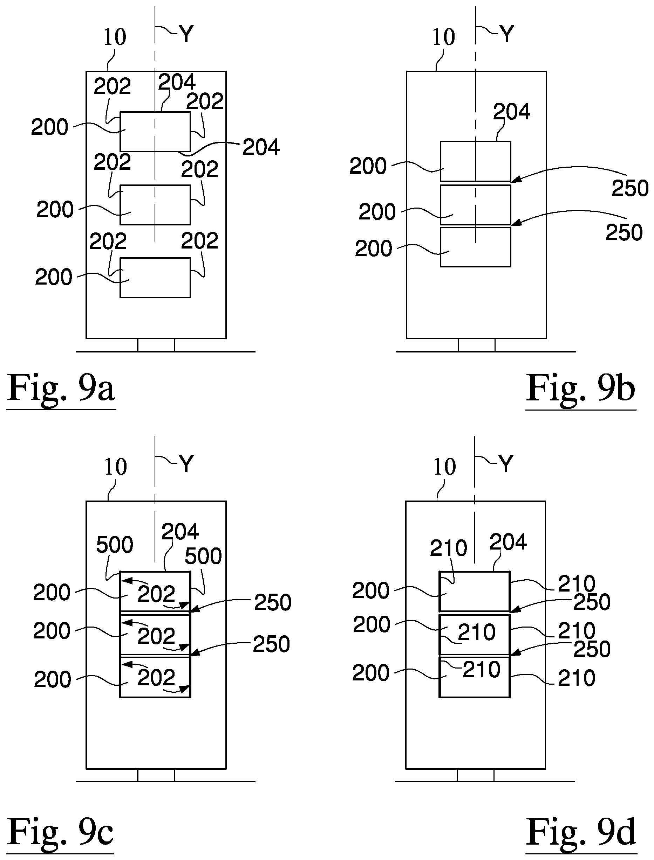

An operating variant for the machine MC, schematized in figures 9a- 9g, involves loading Q >= 2 panels 200, in the same way as previously described, onto each support 16 of the central member 10, not just one.

In particular, the Q panels are loaded and/or unloaded by the robot 110.

Then on each support 16 (fig. 9a) Q panels 200 are mounted, positioned vertically and coplanar to each other (the larger surface of each panel of the Q panels 200 is parallel to the Y axis). Therefore the Q panels 200 have aligned vertical edges 202 and parallel horizontal edges 204.

To facilitate subsequent operations and minimize tape consumption, the Q panels 200 are preferably brought closer so as to leave only a small empty space 250 between the horizontal edges 204 (fig. 9b).

Then the central member 10 is rotated about the Y axis to bring the Q panels 200 in front of a work-station 30 where, preferably with the means already described, a single tape 500 is deposited on the right vertical edges 202 and a single tape 500 on the left vertical edges 202 of all the Q panels 200 (fig. 9c).

Then, at the same work-station, or at a subsequent one after the rotation of the central member 10 about the Y axis, the only right-hand tape 500 and the only left-hand tape 500 are cut at the empty space 250 (fig. 9d). Thus tape sections 210 end up being deposited on the vertical edges 202.

Then at the same work-station, or at a subsequent one after the rotation of the central member 10 about the Y axis, the section of tape 500 remaining deposited on the right vertical edges 202 and the section of tape 500 remaining deposited on the left vertical edges 202 of all the Q panels 200 undergoes an end-trimming operation.

Then at the same work-station, or at a subsequent one after the rotation of the central member 10 about the Y axis, the section of tape 500 remaining deposited on the right vertical edges 202 and the section of tape 500 remaining deposited on the left vertical edges 202 of all the Q panels 200 undergoes a trimming operation.

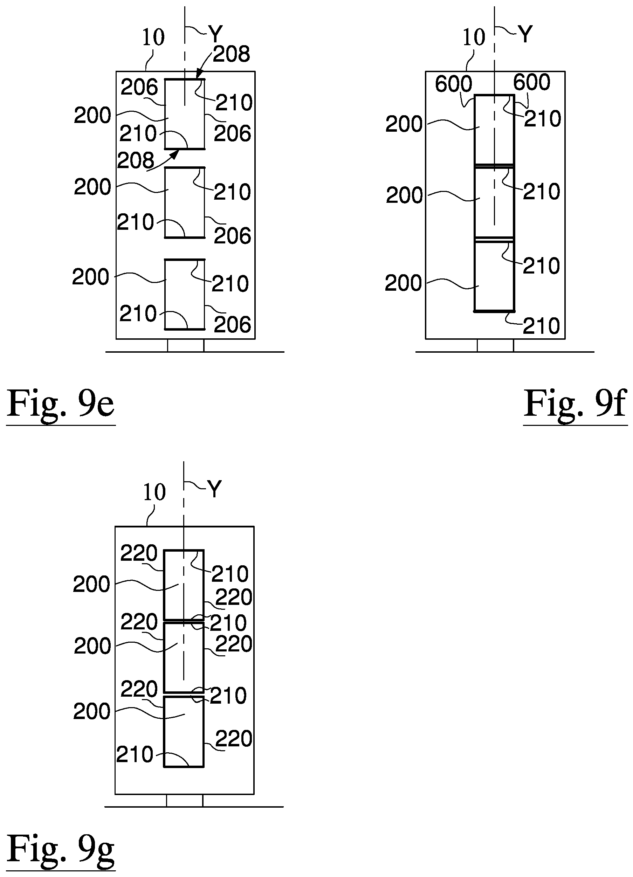

Then the partially edged Q panels 200 are rotated horizontally by 90 degrees so as to place the horizontal edges 204 vertical and the vertical edges 202 horizontal (fig. 9e).

The horizontal edges 204 set vertically are indicated by 206, the vertical edges 202 set horizontally are indicated by 208.

For this purpose, preferably at the same work-station, or at a subsequent one after the rotation of the central member 10 about the Y axis, a dedicated robot or manipulator picks up the Q panels 200 one by one or simultaneously from the central member 10, rotates them and reapplies them to the central member 10.

To facilitate subsequent operations and minimize tape consumption, preferably the Q panels 200 thus rotated are brought closer to each other so as to leave between the horizontal edges 208 only a small empty space such as the empty space 250.

As in the previous step, the central member 10 is then rotated about the Y axis to bring the Q panels 200 in front of a work-station 30 in which, preferably with the means already described, a single tape 600 is deposited on the right vertical edges 206 and a single tape 600 on the left vertical edges 206 of all the Q panels 200 (fig. 9f).

Therefore sections 220 of tape end up deposited on the vertical edges 206.

As in the previous step, at the same work-station or at a subsequent one after the rotation of the central member 10 about the Y-axis, the single right-hand tape 600 and the single left-hand tape 600 are cut at the empty space 250 (fig. 9g).

Then at the same work-station, or at a subsequent one after the rotation of the central member 10 about the Y axis, the section of tape 600 remaining deposited on the right vertical edges 206 and the section of tape 600 remaining deposited on the new left vertical edges 206 of all the Q panels 200 undergoes an end-trimming operation.

Then at the same work-station, or at a subsequent one after the rotation of the central member 10 about the Y axis, the section of tape 600 remaining deposited on the right vertical edges 206 and the section of tape 600 remaining deposited on the left vertical edges 206 of all the Q panels 200 undergoes a trimming operation.

Finally, the Q panels 200, preferably via the robot 110, are unloaded from the central member 10 completely edged around their perimeter.

## Claims

1. Method for squaring and edge-banding panels with the steps of
- loading a panel onto a member rotatable about a vertical rotation axis;
- rotating the rotatable member by predefined angular steps until it makes a complete turn for
sequentially stopping the panel in front of N processing work-stations, N >= 2, arranged in a circular series around the rotatable member,
wherein during the rotation of the rotatable member the panel is always kept vertical;
- as the panel is stopped at the N work-stations, processing edges of the panel by means of panel edge processing units installed in the N work-stations; and
- unloading the processed panel from the rotatable member.

2. Method according to claim 1, wherein the edges of the panel are processed at each of said N work-stations by means of a respective processing unit provided in each work-station.

3. Method according to claim 1 or 2, wherein the panel is mounted on the rotatable member and picked up by the rotatable member, after a complete revolution of the rotatable member, at a loading/unloading zone which are devoid of work-stations and arranged in the circular array between two work-stations.

4. Method according to any preceding claim, wherein
- the panel is milled to create an outline of its peripheral edges at a first work-station; and
- a tape is deposited along the peripheral edges of the panel on surfaces of the panel corresponding to its thickness at a second work-station following the first work-station in the circular array.

5. Method according to claim 4, wherein the tape is trimmed to equalize its width to the thickness of the panel at a third work-station following the second work-station in the circular array or at the same second work-station.

6. Method according to claim 3 or 4 or 5, wherein
- a tape is deposited along the vertical perimeter edges of the panel on surfaces of the panel corresponding to its thickness at an edge-banding work-station and
- a tape is deposited along the horizontal perimeter edges of the panel on surfaces of the panel corresponding to its thickness at another different edge-banding work-station.

7. Method according to claim 3, 4, or 5, wherein, after the tape has been deposited by an edge-banding work-station, an excess of tape protruding cantilevered from a vertex of a panel is cut at the edge-banding work-station that applied the tape.

8. Method according to any preceding claim, wherein the panel is loaded by picking it up while it is lying horizontal, then tilting it to set it vertical and applying it vertical to the rotatable member.

9. Method according to any preceding claim, with the step of loading Q>=2 panels onto the rotatable member and placing them on the rotatable member vertically offset, arranged parallel to the vertical axis of rotation and substantially coplanar with each other.

10. Method according to claim 9, with the step of applying a tape to the vertical and aligned edges of the Q panels loaded onto the rotatable member.

11. Method according to claim 10, with the steps of
simultaneously applying a tape to vertical and aligned edges of the Q panels loaded onto the rotatable member by laying a single tape on vertical and aligned edges of the Q panels, and
then cutting the tape at an empty space separating two adjacent panels of the Q panels.

12. Method according to claim 10 or 11, with the steps of
rotating the Q panels, after a tape has been applied to each panel on opposite vertical edges thereof, so as to arrange vertically and align horizontal tape-free edges of the Q panels to obtain new aligned tape-free vertical edges, and
applying tape to the new aligned vertical edges by laying a same tape on the new aligned vertical edges, and
then cutting the tape at an empty space separating two adjacent panels of the Q panels.

13. Computer numerical control machine tool for squaring and edge-banding panels, comprising:
- a rotatable member that
is incrementally rotatable about a vertical axis by a drive according to predefined angular steps, and
comprises N supports, N >= 2, each configured to receive and support a larger surface of the panel so that during the rotation of the rotatable member said larger surface is always kept vertical;
- N processing work-stations which are arranged in a circular series around the rotatable member, and comprise a unit for processing edges of the panel;
wherein the machine is configured to
- rotate the rotatable member and sequentially bring a panel to each work-station,
- stop the panel at each work-station, and
- process the edges of the panel by means of said processing units.

14. Machine according to claim 13, comprising a pick-up means adapted to
load a panel by lifting it from a loading zone, and
apply it vertically on one of the N supports of the rotatable member.

15. Machine according to claim 13 or 14, wherein the N work-stations comprise:
- a squaring station comprising a milling unit movable along a vertical and/or horizontal axis configured to mill sides of the panel and thus create the outline of its perimeter edges;
- an edge-banding work-station comprising an edge-banding head movable along a vertical and/or horizontal axis configured to deposit a tape along the perimeter edges of the panel on surfaces of the panel corresponding to its thickness;
- a trimming work-station comprising a trimming unit movable along a vertical and/or horizontal axis configured to trim corresponding sides of the panel and equalize the width of the tape to the thickness of the panel.
